(19) Europäisches Patentamt
European Patent Office
Office européen des brevets

(11) **EP 3 166 289 A1**

(12) **EUROPEAN PATENT APPLICATION**
published in accordance with Art. 153(4) EPC

(43) Date of publication:
**10.05.2017 Bulletin 2017/19**

(51) Int Cl.:
***H04M 1/725*** (2006.01)

(21) Application number: **14898774.6**

(22) Date of filing: **26.07.2014**

(86) International application number:
**PCT/CN2014/083097**

(87) International publication number:
**WO 2016/015183 (04.02.2016 Gazette 2016/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventor: **WANG, Hongjun
Shenzhen
Guangdong 518129 (CN)**

(74) Representative: **Maiwald Patentanwalts GmbH
Engineering
Elisenhof
Elisenstrasse 3
80335 München (DE)**

(54) **METHOD FOR CONTROLLING DISPLAY OF SCREEN OF MOBILE TERMINAL AND MOBILE TERMINAL**

(57)    The present invention discloses a method for controlling mobile terminal screen display, and a mobile terminal. The method includes: acquiring a current tilt angle of a mobile terminal; and adjusting an interface content layout of a mobile terminal screen according to the tilt angle when determining that the current tilt angle is in a second or third preset angle range; or keeping an existing interface content layout of a mobile terminal screen when determining that the current tilt angle of the mobile terminal is in a first preset angle range, where the second, first, and third preset angle ranges sequentially form a continuous angle range.

FIG. 1

## Description

## TECHNICAL FIELD

The present invention relates to the technical field of mobile terminals, and in particular, to a method for controlling mobile terminal screen display and a mobile terminal.

## BACKGROUND

Currently, functions of mobile terminals such as a mobile phone and a tablet keep increasing. Nowadays, most smart mobile terminals can switch between a landscape orientation and a portrait orientation of an interface (which is equivalent to rotating the interface by 90 degrees) on a mobile terminal screen so long as a tilt angle of the mobile terminal is greater than a specific angle, which, however, tends to cause unwanted switching. That is, although the mobile terminal tilts at a specific angle, a user does not expect switching of interface display. Consequently, control of screen display does not exactly meet a use requirement of the user, thereby lowering user experience.

## SUMMARY

Embodiments of the present invention provide a method for controlling mobile terminal screen display and a mobile terminal to better meet a use requirement of a user and improve user experience.

According to a first aspect, an embodiment of the present invention provides a method for controlling mobile terminal screen display, where the method includes:

acquiring a current tilt angle of a mobile terminal; and adjusting an interface content layout of a mobile terminal screen according to the tilt angle when determining that the current tilt angle is in a second or third preset angle range; or keeping an existing interface content layout of a mobile terminal screen when determining that the current tilt angle of the mobile terminal is in a first preset angle range, where the second, first, and third preset angle ranges sequentially form a continuous angle range.

With reference to the first aspect, in a first possible implementation manner of the first aspect, the adjusting an interface content layout of a mobile terminal screen according to the tilt angle includes:

determining an adjustment magnitude according to the tilt angle, and adjusting all or a part of interface content of the mobile terminal screen according to the adjustment magnitude.

With reference to the first possible implementation manner of the first aspect, in a second possible implementation manner of the first aspect, the determining an adjustment magnitude according to the tilt angle, and adjusting all or a part of interface content of the mobile terminal screen according to the adjustment magnitude includes:

determining an adjustment distance according to the tilt angle, and panning or floating all or a part of the interface content of the mobile terminal screen, where a distance of the panning or floating is the adjustment distance; or determining an adjustment angle according to the tilt angle, and rotating all or a part of the interface content of the mobile terminal screen around a center of the mobile terminal screen, where an angle of the rotating is the adjustment angle.

With reference to the first or second possible implementation manner of the first aspect, in a third possible implementation manner of the first aspect, the adjusting an interface content layout of a mobile terminal screen according to the tilt angle further includes: determining an adjustment direction according to the tilt angle, and adjusting the interface content layout of the mobile terminal screen in the determined adjustment direction.

With reference to the third possible implementation manner of the first aspect, in a fourth possible implementation manner of the first aspect, the determining an adjustment direction according to the tilt angle includes:

when the current tilt angle is in the second preset angle range, determining that the adjustment direction is a first direction; or when the current tilt angle is in the third preset angle range, determining that the adjustment direction is a second direction.

With reference to the third or fourth possible implementation manner of the first aspect, in a fifth possible implementation manner of the first aspect, the first preset angle range is:

a range of an angle greater than or equal to a first threshold and less than or equal to a second threshold, where the first threshold is less than the second threshold; the tilt angle of the mobile terminal is an angle included between a length direction of the mobile terminal screen and a horizontal plane; and the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is upward, and panning or floating all or a part of the interface content of the mobile terminal screen upward on the screen; or

if the current tilt angle of the mobile terminal is greater than the second threshold, determining that the adjustment direction is downward, and panning or floating all or a part of the interface content of the mobile terminal screen downward on the screen.

With reference to the third or fourth possible implementation manner of the first aspect, in a sixth possible implementation manner of the first aspect, the first preset angle range is:

a range of an angle greater than or equal to a first threshold and less than or equal to a second threshold, where the first threshold is less than the second threshold;
the tilt angle of the mobile terminal is an angle included between a length direction of the mobile terminal screen and a horizontal plane; and
the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is downward, and panning or floating all or a part of the interface content of the mobile terminal screen downward on the screen; or
if the current tilt angle of the mobile terminal is greater than the second threshold, determining that the adjustment direction is upward, and panning or floating all or a part of the interface content of the mobile terminal screen upward on the screen.

With reference to the third or fourth possible implementation manner of the first aspect, in a seventh possible implementation manner of the first aspect, the first preset angle range is:

a range of an angle greater than or equal to a first threshold and less than or equal to a second threshold, where the first threshold is less than the second threshold;
the tilt angle of the mobile terminal is an angle included between a width direction of the mobile terminal screen and a horizontal plane; and
the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is rightward, and panning or floating all or a part of the interface content of the mobile terminal screen rightward on the screen; or

if the current tilt angle of the mobile terminal is greater than the second threshold, determining that the adjustment direction is leftward, and panning or floating all or a part of the interface content of the mobile terminal screen leftward on the screen.

With reference to the third or fourth possible implementation manner of the first aspect, in an eighth possible implementation manner of the first aspect, the first preset angle range is:

a range of an angle greater than or equal to a first threshold and less than or equal to a second threshold, where the first threshold is less than the second threshold;
the tilt angle of the mobile terminal is an angle included between a width direction of the mobile terminal screen and a horizontal plane; and
the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is leftward, and panning or floating all or a part of the interface content of the mobile terminal screen leftward on the screen; or
if the current tilt angle of the mobile terminal is greater than the second threshold, determining that the adjustment direction is rightward, and panning or floating all or a part of the interface content of the mobile terminal screen rightward on the screen.

With reference to any one of the first possible implementation manner of the first aspect to the eighth possible implementation manner of the first aspect, in a ninth possible implementation manner of the first aspect, the method further includes:

acquiring ambient light intensity information of the mobile terminal; and
the determining an adjustment magnitude according to the tilt angle specifically includes:

determining, according to the ambient light intensity information, an adjustment magnitude corresponding to the tilt angle.

With reference to the first aspect or any one of the first possible implementation manner of the first aspect to the ninth possible implementation manner of the first aspect, in a tenth possible implementation manner of the first aspect, the method further includes:

receiving angle range adjustment information; and adjusting at least one preset angle range of the first, second, or third preset angle range according to the angle range adjustment information.

According to a second aspect, an embodiment of the present invention provides a method for controlling mobile terminal screen display, where the method includes:

acquiring a current tilt angle of a mobile terminal; and adjusting an interface content layout of a mobile terminal screen according to the tilt angle of the mobile terminal when determining that the current tilt angle is in a first preset angle range; or keeping an existing interface content layout of a mobile terminal screen when determining that the current tilt angle of the mobile terminal is in a second or third preset angle range, where the second, first, and third preset angle ranges sequentially form a continuous angle range.

According to a third aspect, an embodiment of the present invention provides a mobile terminal, where the mobile terminal includes:

a sensor, configured to acquire a current tilt angle of the mobile terminal; a screen, configured to display interface content on the mobile terminal; and a processor, configured to adjust an interface content layout of a mobile terminal screen according to the tilt angle of the mobile terminal when determining that the current tilt angle is in a second or third preset angle range; or keep an interface content layout of a mobile terminal screen when determining that the current tilt angle of the mobile terminal is in a first preset angle range, where the second, first, and third preset angle ranges sequentially form a continuous angle range.

With reference to the third aspect, in a first possible implementation manner of the third aspect, the processor being configured to adjust an interface content layout of a mobile terminal screen according to the tilt angle includes:

the processor being configured to determine an adjustment magnitude according to the tilt angle, and adjust all or a part of interface content of the mobile terminal screen according to the adjustment magnitude.

With reference to the first possible implementation manner of the third aspect, in a second possible implementation manner of the third aspect, the processor being configured to determine an adjustment magnitude according to the tilt angle, and adjust all or a part of interface content of the mobile terminal screen according to the adjustment magnitude includes:

the processor being configured to determine an adjustment distance according to the tilt angle, and pan or float all or a part of the interface content of the mobile terminal screen, where a distance of the panning or floating is the adjustment distance; or the processor being configured to determine an adjustment angle according to the tilt angle, and rotate all or a part of the interface content of the mobile terminal screen around a center of the mobile terminal screen, where an angle of the rotating is the adjustment angle.

With reference to the first or second possible implementation manner of the third aspect, in a third possible implementation manner of the third aspect, the processor being configured to adjust an interface content layout of a mobile terminal screen according to the tilt angle further includes: the processor being configured to determine an adjustment direction according to the tilt angle, and adjust the interface content layout of the mobile terminal screen in the determined adjustment direction.

With reference to the third possible implementation manner of the third aspect, in a fourth possible implementation manner of the third aspect, the processor being configured to determine an adjustment direction according to the tilt angle is specifically:

the processor being configured to: when the current tilt angle is in the second preset angle range, determine that the adjustment direction is a first direction; or when the current tilt angle is in the third preset angle range, determine that the adjustment direction is a second direction.

With reference to the third or fourth possible implementation manner of the third aspect, in a fifth possible implementation manner of the third aspect, the first preset angle range is:

a range of an angle greater than or equal to a first threshold and less than or equal to a second threshold, where the first threshold is less than the second threshold; the tilt angle of the mobile terminal is an angle included between a length direction of the mobile terminal screen and a horizontal plane; and the processor being configured to determine an adjustment direction according to the tilt angle, and adjust the interface content layout of the mobile terminal screen in the determined adjustment direction includes:

the processor being configured to:

if the current tilt angle of the mobile terminal is less than the first threshold, determine that the adjustment direction is upward, and pan or float all or a part of the interface content of the mobile terminal screen upward on the screen; or
if the current tilt angle of the mobile terminal is greater than the second threshold, determine that the adjustment direction is downward, and pan or float all or a part of the interface content of the mobile terminal screen downward on the screen.

With reference to the third or fourth possible implementation manner of the third aspect, in a sixth possible implementation manner of the third aspect, the first preset angle range is:

a range of an angle greater than or equal to a first threshold and less than or equal to a second threshold, where the first threshold is less than the second threshold;
the tilt angle of the mobile terminal is an angle included between a length direction of the mobile terminal screen and a horizontal plane; and
the processor being configured to determine an adjustment direction according to the tilt angle, and adjust the interface content layout of the mobile terminal screen in the determined adjustment direction includes:

the processor being configured to:

if the current tilt angle of the mobile terminal is less than the first threshold, determine that the adjustment direction is downward, and pan or float all or a part of the interface content of the mobile terminal screen downward on the screen; or
if the current tilt angle of the mobile terminal is greater than the second threshold, determine that the adjustment direction is upward, and pan or float all or a part of the interface content of the mobile terminal screen upward on the screen.

With reference to the third or fourth possible implementation manner of the third aspect, in a seventh possible implementation manner of the third aspect, the first preset angle range is:

a range of an angle greater than or equal to a first threshold and less than or equal to a second threshold, where the first threshold is less than the second threshold;
the tilt angle of the mobile terminal is an angle included between a width direction of the mobile terminal screen and a horizontal plane; and
the processor being configured to determine an adjustment direction according to the tilt angle, and adjust the interface content layout of the mobile terminal screen in the determined adjustment direction includes:

the processor being configured to:

if the current tilt angle of the mobile terminal is less than the first threshold, determine that the adjustment direction is rightward, and pan or float all or a part of the interface content of the mobile terminal screen rightward on the screen; or
if the current tilt angle of the mobile terminal is greater than the second threshold, determine that the adjustment direction is leftward, and pan or float all or a part of the interface content of the mobile terminal screen leftward on the screen.

With reference to the third or fourth possible implementation manner of the third aspect, in an eighth possible implementation manner of the third aspect, the first preset angle range is:

a range of an angle greater than or equal to a first threshold and less than or equal to a second threshold, where the first threshold is less than the second threshold;
the tilt angle of the mobile terminal is an angle included between a width direction of the mobile terminal screen and a horizontal plane; and
the processor being configured to determine an adjustment direction according to the tilt angle, and adjust the interface content layout of the mobile terminal screen in the determined adjustment direction includes:

the processor being configured to:

if the current tilt angle of the mobile terminal is less than the first threshold, determine that the adjustment direction is leftward, and pan or float all or a part of the interface content of the mobile terminal screen leftward on the screen; or
if the current tilt angle of the mobile terminal is greater than the second threshold, determine that the adjustment direction is rightward, and pan or float all or a part of the interface content of the mobile terminal screen rightward on the screen.

With reference to any one of the first possible implementation manner of the third aspect to the eighth possible implementation manner of the third aspect, in a ninth possible implementation manner of the third aspect, the sensor is further configured to acquire ambient light intensity information of the mobile terminal; and
the processor being configured to determine an adjustment magnitude according to the tilt angle specifically includes:

the processor being configured to determine, according to the ambient light intensity information, an adjustment magnitude corresponding to the tilt angle.

With reference to the third aspect or any one of the first possible implementation manner of the third aspect to the ninth possible implementation manner of the third aspect, in a tenth possible implementation manner of the third aspect, the processor is further configured to:

receive angle range adjustment information; and adjust at least one preset angle range of the first, second, or third preset angle range according to the angle range adjustment information.

According to a fourth aspect, an embodiment of the present invention provides a mobile terminal, where the mobile terminal includes:

a sensor, configured to acquire a current tilt angle of the mobile terminal;
a screen, configured to display interface content on the mobile terminal; and
a processor, configured to adjust an interface content layout of a mobile terminal screen according to the tilt angle of the mobile terminal when determining that the current tilt angle is in a first preset angle range; or keep an interface content layout of a mobile terminal screen when determining that the current tilt angle of the mobile terminal is in a second or third preset angle range, where
the second, first, and third preset angle ranges sequentially form a continuous angle range.

According to the method and the mobile terminal that are provided in the embodiments of the present invention, a current tilt angle of the mobile terminal may be detected; and an interface content layout of a mobile terminal screen is adjusted according to the tilt angle only in a case in which the current tilt angle of the mobile terminal meets a specific range condition, for example, when the current tilt angle of the mobile terminal is in a second or third preset angle range; or an existing interface content layout of a mobile terminal screen is kept when the current tilt angle of the mobile terminal is in a first preset angle range. In this way, screen display adjustment is avoided in a case in which a user does not expect the screen display adjustment although the mobile terminal tilts at a specific angle, so that the method for controlling mobile terminal screen display better meets a use requirement of the user and improves user experience.

**BRIEF DESCRIPTION OF DRAWINGS**

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a method for controlling mobile terminal screen display according to an embodiment of the present invention;
FIG. 2 is a flowchart of another method for controlling mobile terminal screen display according to an embodiment of the present invention;
FIG. 3a, FIG. 3b, FIG. 4a, FIG. 4b, FIG. 5a, FIG. 5b, and FIG. 15 are schematic diagrams of a tilt angle of a mobile terminal according to an embodiment of the present invention;
FIG. 6, FIG. 7, FIG. 8, FIG. 9, and FIG. 10 are schematic effect diagrams of a method for controlling mobile terminal screen display according to an embodiment of the present invention;
FIG. 11, FIG. 12, and FIG. 13 are schematic effect diagrams of another method for controlling mobile terminal screen display according to an embodiment of the present invention;
FIG. 14 is a schematic structural diagram of a mobile terminal according to an embodiment of the present invention; and
FIG. 16a to FIG. 16g are schematic effect diagrams of another method for controlling mobile terminal screen display according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.
The term "and/or" in this specification describes only an association relationship for describing associated objects and represents that three relationships may exist. For example, A and/or B may represent the following three cases: only A exists, both A and B exist, and only B exists. In addition, the character "/" in this specification generally indicates an "or" relationship between associated objects.

**Embodiment 1**

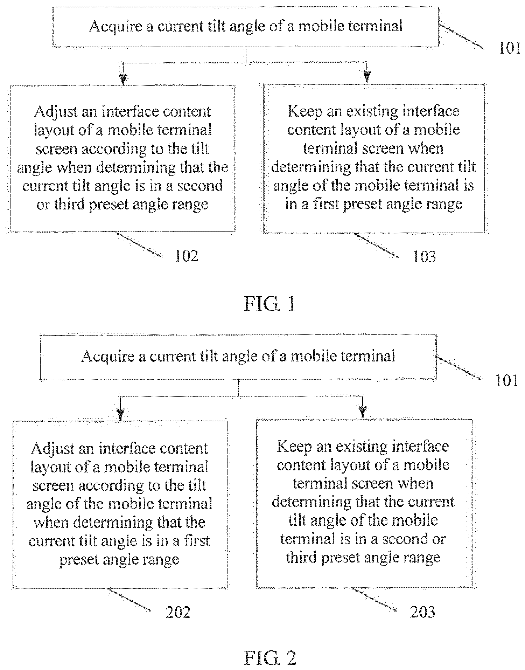

As shown in FIG. 1, in an embodiment of a method for controlling mobile terminal screen display according to the present invention, the method may include the following steps:

101. Acquire a current tilt angle of a mobile terminal.

The current tilt angle of the mobile terminal may be detected and acquired by using a sensor such as a gravity sensor or a gyro sensor.
The mobile terminal in the present invention may be a mobile terminal device with a screen, such as a mobile phone, a tablet, or a personal digital assistant (PDA, personal digital assistant), where the screen may be a touchscreen.
102. Adjust an interface content layout of a mobile terminal screen according to the tilt angle when determining that the current tilt angle is in a second or third preset angle range.
103. Keep an existing interface content layout of a mobile terminal screen when determining that the current tilt angle of the mobile terminal is in a first preset angle range, that is, skip adjusting the interface content layout currently displayed on the mobile terminal screen.
The second, first, and third preset angle ranges sequentially form a continuous angle range.
Further, the adjusting an interface content layout of a mobile terminal screen according to the tilt angle includes:

determining an adjustment magnitude according to the tilt angle, and adjusting all or a part of interface content of the mobile terminal screen according to the adjustment magnitude.

Further, the determining an adjustment magnitude according to the tilt angle, and adjusting all or a part of interface content of the mobile terminal screen according to the adjustment magnitude includes:

determining an adjustment distance according to the tilt angle, and panning or floating all or a part of the interface content of the mobile terminal screen, where a distance of the panning or floating is the adjustment distance; or
determining an adjustment angle according to the tilt angle, and rotating all or a part of the interface content of the mobile terminal screen around a center of the mobile terminal screen, where an angle of the rotating is the adjustment angle.

Further, the adjusting an interface content layout of a mobile terminal screen according to the tilt angle further includes: determining an adjustment direction according to the tilt angle, and adjusting the interface content layout of the mobile terminal screen in the determined adjustment direction.
Further, the determining an adjustment direction according to the tilt angle includes:

when the current tilt angle is in the second preset angle range, determining that the adjustment direction is a first direction; or
when the current tilt angle is in the third preset angle range, determining that the adjustment direction is a second direction.

The first direction may be the same as or different from the second direction, which may be determined according to a specific condition.
Further, the first preset angle range is:

a range of an angle greater than or equal to a first threshold and less than or equal to a second threshold, where the first threshold is less than the second threshold.

Specifically, the current tilt angle of the mobile terminal may be an acute angle or a right angle, the first threshold is greater than 0 degrees, and the second threshold is less than or equal to 90 degrees.
For example, the first threshold may be 30 degrees, and the second threshold may be 60 degrees.
In a specific embodiment, the tilt angle of the mobile terminal is an angle included between a length direction of the mobile terminal screen and a horizontal plane.
In an implementation manner, the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is upward, and panning or floating all or a part of the interface content of the mobile terminal screen upward on the screen; or
if the current tilt angle of the mobile terminal is greater than the second threshold, determining that the adjustment direction is downward, and panning or floating all or a part of the interface content of the mobile terminal screen downward on the screen.

Alternatively,
in another implementation manner, the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is downward, and panning or floating all or a part of the interface content of the mobile terminal screen downward on the screen; or
if the current tilt angle of the mobile terminal is greater than the second threshold, determining that the adjustment direction is upward, and panning or floating all or a part of the interface content of the mobile terminal screen upward on the screen.

In another specific embodiment, the tilt angle of the mobile terminal is an angle included between a width direction of the mobile terminal screen and a horizontal plane.

In an implementation manner, the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is rightward, and panning or floating all or a part of the interface content of the mobile terminal screen rightward on the screen; or
if the current tilt angle of the mobile terminal is greater than the second threshold, determining that the adjustment direction is leftward, and panning or floating all or a part of the interface content of the mobile terminal screen leftward on the screen.

Alternatively,
in another implementation manner, the determining an adjustment direction according to the tilt angle, and adjusting the interface content layout of the mobile terminal screen in the determined adjustment direction includes:

if the current tilt angle of the mobile terminal is less than the first threshold, determining that the adjustment direction is leftward, and panning or floating all or a part of the interface content of the mobile terminal screen leftward on the screen; or
if the current tilt angle of the mobile terminal is greater than the second threshold, determining that the adjustment direction is rightward, and panning or floating all or a part of the interface content of the mobile terminal screen rightward on the screen.

Further, the method may further include:

acquiring ambient light intensity information of the mobile terminal, where
the ambient light intensity information of the mobile terminal may be acquired by using a light sensor.

The determining an adjustment magnitude according to the tilt angle specifically includes:

determining, according to the ambient light intensity information, an adjustment magnitude corresponding to the tilt angle.

Further, the method may further include:

receiving angle range adjustment information; and adjusting at least one preset angle range of the first, second, or third preset angle range according to the angle range adjustment information.

Information about adjustment of an angle range may be received from a user. In this way, for a different user, a proper angle range may be configured for the different user according to an actual use habit or requirement of the different user, and the interface content layout of the mobile terminal screen may be adjusted according to the proper angle range. Such an adjustment can better meet the actual use habit or requirement of the user, and reduce an unnecessary adjustment of the interface content layout of the mobile terminal screen.

Further, optionally, the method may further include:

receiving feedback information of a user; and the determining an adjustment magnitude according to the tilt angle may include:

determining, according to the feedback information, an adjustment magnitude corresponding to the tilt angle.

For example, after the interface content layout of the mobile terminal screen is adjusted, a feedback about this adjustment may be received from the user. For example, the user may feed back whether an adjustment size is too great or too small, so that the adjustment size is configured according to the feedback information of the user.

In the present invention, the first threshold and/or the second threshold may be preset by the mobile terminal, or set by the user, or obtained after statistics are performed according to a circumstance of using the mobile terminal by the user. For a different user, the first threshold and/or the second threshold may be determined according to a use habit of the different user. Generally, when a user holds a mobile terminal such as a mobile phone normally, the mobile phone is not necessarily exactly horizontal or vertical, but tilts at a specific angle, and an angle range exists between the mobile phone and a horizontal plane and/or a vertical plane. In the prior art, in all circumstances in which the mobile phone is not horizontal or vertical as detected by a gravity sensor, it is determined that the mobile phone is in a tilt state, and an interface content layout currently displayed on a mobile phone screen is adjusted. Consequently, although sometimes the mobile phone tilts at a specific angle, the user is using the mobile phone normally, and adjusting interface content currently displayed on the mobile phone screen affects the user in normally using the mobile phone. According to the present invention, a gravity sensor or a gyro is used to detect a current tilt angle of the mobile phone. When the current tilt angle of the mobile phone is in a normal angle range (the first preset angle range in this embodiment) of the mobile phone held by the user, the interface content layout currently displayed on the mobile phone screen is not adjusted, which better meets a user habit of using the mobile phone, avoids an unnecessary adjustment of the interface content layout currently displayed on the mobile phone screen, reduces power consumption of the mobile phone, and enhances user experience of the mobile phone. When the current tilt angle of the mobile phone is outside the normal angle range (in the second or third preset angle range in this embodiment) of the mobile phone held by the user, the interface content layout of the mobile phone screen is adjusted according to the tilt angle. Because the first threshold and the second threshold are related to the user habit of using the mobile phone, a more intelligent method for adjusting the interface content layout of the mobile phone screen, which provides better experience, can be provided for the user in this embodiment of the present invention based on the user habit of using the mobile phone.

In this embodiment, using a mobile phone as an example, that a current tilt angle of the mobile phone is outside a normal angle range of the mobile phone held by a user may be specifically: the current tilt angle of the mobile phone is less than the first threshold or greater than the second threshold. That is, that the current tilt angle of the mobile phone is in the normal angle range of the mobile phone held by the user may be specifically: the current tilt angle of the mobile phone is greater than or equal to the first threshold and less than or equal to the second threshold.

The adjusting the interface content layout of the mobile terminal screen may include: panning or floating or rotating a part or all of interface content of the mobile terminal screen in a determined direction; or changing an interface content part in a specific area from a hidden state to a displayed state, from a displayed state to a hidden state, or the like. The floating may refer to moving one or more elements in the interface content of the mobile terminal screen from an original position to a new position on the interface to facilitate a user operation. Further, optionally, after completion of the user operation, or after the user changes the tilt angle of the mobile phone by some degrees, the one or more elements may be relocated back to the original position. For example, the floating refers to moving an icon in the interface content of the mobile terminal screen from an original position to a new position on the interface to facilitate a user operation. Optionally, after completion of the user operation, the icon may be relocated back to the original position. As seen by the user, the icon seems floating on the interface.

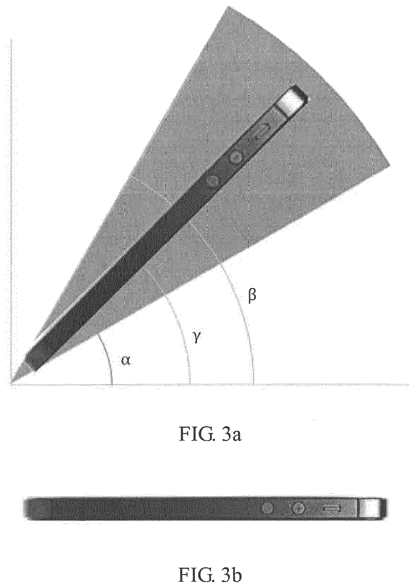

This embodiment of the present invention uses the first preset angle range as a basic horizontal plane of gravity sensing (equivalent to an occasion of normally using the mobile phone), and the interface content layout of the mobile phone screen is adjusted according to the tilt angle when the current tilt angle of the mobile phone (for example, an angle $\gamma$ included between the mobile phone and the horizontal plane in FIG. 3a) is outside the first preset angle range. As shown in FIG. 3a, FIG. 4a, and FIG. 5a, gray areas in the figures are the first preset angle range.

$\alpha$ is a minimum angle in the first preset angle range, that is, a minimum angle when the user uses the mobile phone normally, and $\alpha$ in this embodiment is the first threshold. In an embodiment, $\alpha$ is greater than 0 degrees.

P is a maximum angle in the first preset angle range, that is, a maximum angle when the user uses the mobile phone normally, and $\beta$ in this embodiment is the second threshold.

$\gamma$ is an angle of the mobile phone against the horizontal plane in a right view of the mobile phone (which may also be understood as an angle of a length direction of the mobile phone screen against the horizontal plane), and in this embodiment, is the current tilt angle of the mobile phone. This embodiment of the present invention is described only by using an example in which $\gamma$ is an acute angle (or a right angle). That is, in this embodiment of the present invention, a $\gamma$ value may be in a range greater than 0 degrees and less than or equal to 90 degrees. In practice, $\gamma$ may be an obtuse angle. When being an obtuse angle, $\gamma$ may be understood in a same or similar way by referring to a circumstance in which $\gamma$ is an acute angle (or a right angle). In this embodiment of the present invention, the first preset angle range may be set to a range greater than 0 degrees and less than or equal to 90 degrees (for example, a range shown by a gray area in FIG. 3a is the first preset angle range).

$\mu$ is a minimum bearable tilt angle of the mobile phone in a process of using the mobile phone by the user, and $\mu$ may be greater than or equal to 0 degrees, that is, if the tilt angle of the mobile phone is less than this tilt angle, the user is unable to normally view the interface content of the mobile phone screen.

$\mu2$ is a maximum bearable tilt angle of the mobile phone in a process of using the mobile phone by the user, and $\mu2$ may be less than or equal to 90 degrees, that is, if the tilt angle of the mobile phone is greater than this tilt angle, the user is unable to normally view the interface content of the mobile phone screen.

$\mu$ and $\mu2$ are optional, and the following content re-

lated to $\mu$ and $\mu 2$ is also optional.

$$\mu<\alpha<\beta<\mu 2.$$

In this embodiment of the present invention, when the current tilt angle $\gamma$ of the mobile phone is between $\alpha$ and $\beta$ (as shown in FIG. 3 a) or when the current tilt angle of the mobile phone is equal to $\alpha$ or $\beta$, it may be considered in this embodiment of the present invention that the tilt angle of the mobile phone is in the range of normally using the mobile phone by the user, and the interface content layout of the mobile phone screen does not change. When the tilt angle of the mobile phone is in the range of normally using the mobile phone by the user, angle conversion may be performed on the tilt angle of the mobile phone in this embodiment of the present invention. After the angle conversion (for example, when the current tilt angle $\gamma$ of the mobile phone is between $\alpha$ and $\beta$, the current tilt angle $\gamma$ may be converted into 0 degrees), a gravity sensing status of the mobile phone may be considered as being parallel to the horizontal plane (for example, a gravity sensing status after the angle conversion is performed in this embodiment of the present invention when the tilt angle of the mobile phone is in the normal range, as shown in FIG. 3b), without generating a gravity sensing component, and therefore, the interface content layout of the mobile phone screen is not adjusted.

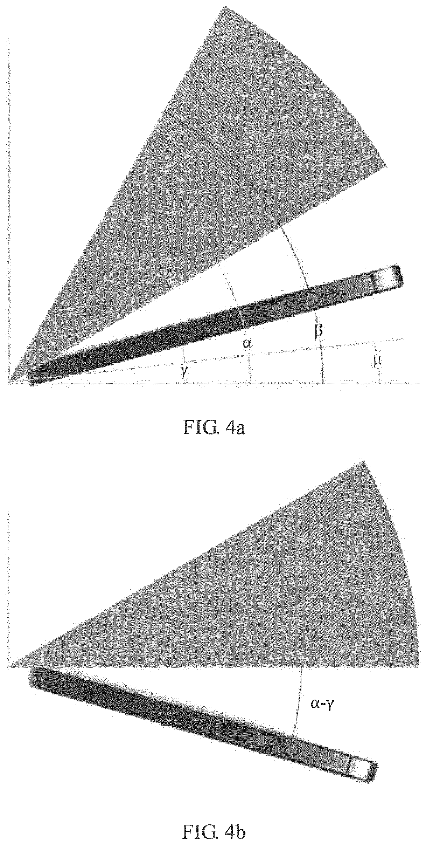

When the current tilt angle $\gamma$ of the mobile phone is less than $\alpha$ (as shown in FIG. 4a), it may be considered in this embodiment of the present invention that the tilt angle of the mobile phone exceeds the range of normally using the mobile phone by the user and may affect the user in normally using the mobile phone. In this case, the interface content layout of the mobile phone screen needs to be adjusted. An adjustment magnitude may be obtained in the following manner: Specifically, angle conversion processing may be performed on the tilt angle according to the current tilt angle of the mobile phone to obtain an angle $\alpha-\gamma$, and an adjustment magnitude corresponding to the angle $\alpha-\gamma$ is determined. For example, the adjustment magnitude may be equal to a preset adjustment coefficient $\times$ ($\alpha-\gamma$). As shown in FIG. 4b, although the current tilt angle of the mobile phone is actually $\gamma$, angle conversion processing may be performed on the current tilt angle in this embodiment of the present invention, and the adjustment magnitude may be determined according to the angle $\alpha-\gamma$ obtained after the angle conversion processing, so as to avoid the following circumstance: no adjustment is performed when the tilt angle $\gamma$ of the mobile phone is $\alpha$, but a relatively great magnitude of adjustment is performed when $\gamma$ is slightly less than $\alpha$.

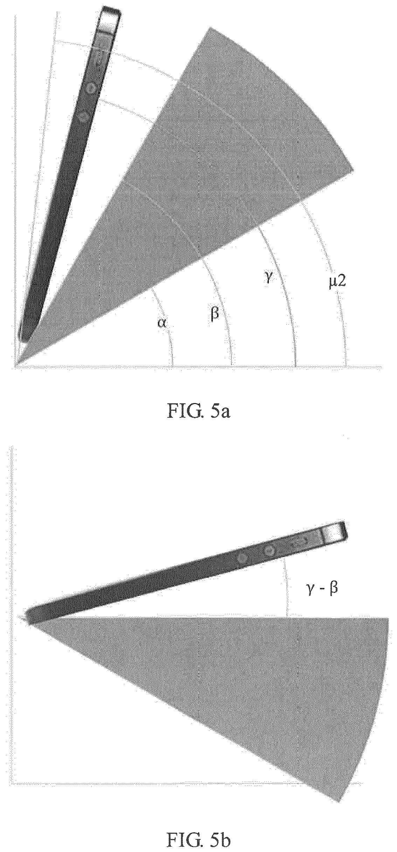

When the current tilt angle $\gamma$ of the mobile phone is greater than $\beta$ and less than $\mu 2$ (as shown in FIG. 5a), it may be considered in this embodiment of the present invention that the tilt angle of the mobile phone exceeds the range of normally using the mobile phone by the user but does not exceed the maximum bearable tilt angle of the mobile phone in the process of using the mobile phone by the user. In this case, because the tilt angle of the mobile phone is too great, a line of sight of the user watching the mobile phone screen may be affected, the user may be affected in normally using the mobile phone, and user experience of using the mobile phone is affected. The interface content layout of the mobile phone screen needs to be adjusted. An adjustment magnitude may be obtained in the following manner: Specifically, angle conversion processing may be performed on the tilt angle according to the current tilt angle of the mobile phone to obtain an angle $\gamma-\beta$, and an adjustment magnitude corresponding to the angle $\gamma-\beta$ is determined. As shown in FIG. 5b, although the current tilt angle of the mobile phone is actually $\gamma$, angle conversion processing may be performed on the current tilt angle in this embodiment of the present invention, and the adjustment magnitude may be determined according to the angle $\gamma-\beta$ obtained after the angle conversion processing, so as to avoid the following circumstance: no adjustment is performed when the tilt angle $\gamma$ of the mobile phone is $\beta$, but a relatively great magnitude of adjustment is performed when $\gamma$ is slightly greater than $\beta$.

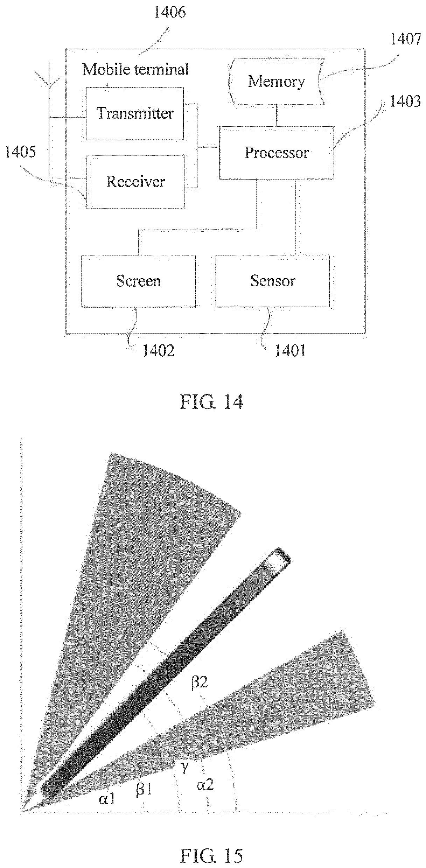

Each embodiment of the present invention is described by using an example in which only one preset angle range (the first preset angle range in this embodiment) is used as a basic horizontal plane of gravity sensing (equivalent to an occasion of normally using the mobile phone), and a gray area is a preset angle range. In a case in which multiple preset angle ranges are used as the basic horizontal plane of gravity sensing (equivalent to an occasion of normally using the mobile phone), as shown in FIG. 15 (showing two preset angle ranges: $\alpha 1$ to $\beta 1$, and $\alpha 2$ to $\beta 2$), the case may be understood by referring to related or similar content of a case in which one preset angle range is used as the basic horizontal plane of gravity sensing. In this case, it may be understood that the first, second, and third preset angle ranges in this embodiment of the present invention are included, and the second, first, and third preset angle ranges sequentially form a continuous angle range (for example, a continuous angle range 0 to $\alpha 2$); and a gray area indicated by the angle range $\alpha 2$ to $\beta 2$ may be understood as a fourth preset angle range that is further newly added on a basis of this embodiment of the present invention.

An interface content part of the mobile terminal screen may be at least one icon, button, and/or picture, or the like on the interface.

A direction determined according to a counter-gravity sensing principle is opposite to an adjustment direction determined according to a gravity sensing principle. Counter-gravity sensing display is: panning or floating all or a part of the interface content of the mobile terminal screen in a direction opposite to gravity sensing (for example, according to the gravity sensing principle, when the mobile phone tilts leftward, the interface content is panned or floated leftward; however, according to the counter-gravity sensing principle, when the mobile phone tilts leftward, the interface content is panned or floated rightward).

In this embodiment of the present invention, the first preset angle range is used as a basic horizontal plane of gravity sensing. When the current tilt angle of the mobile phone is in the first preset angle range, gravity/counter-gravity sensing display is not started, and the interface content layout of the mobile phone screen is not adjusted; when the current tilt angle of the mobile phone is greater than the second threshold of the first preset angle range, if the gravity sensing display is started, the interface content layout of the mobile phone screen is adjusted in a downward/rightward direction; when the current tilt angle of the mobile phone is less than the first threshold of the first preset angle range, the interface content layout of the mobile phone screen is adjusted in an upward/leftward direction.

If the counter-gravity sensing display is started, the interface content layout of the mobile phone screen is adjusted in a direction opposite to gravity sensing.

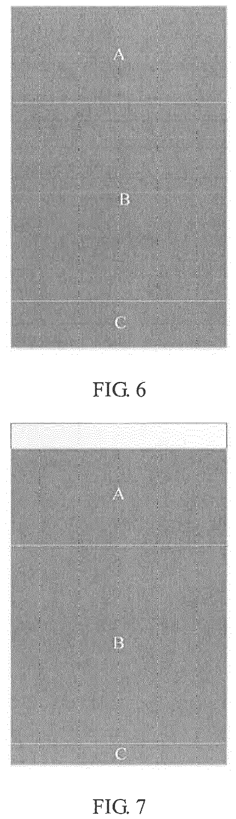

The following uses an example to describe a circumstance of panning entire interface content of the mobile phone screen upward or downward according to the gravity sensing or counter-gravity sensing principle. FIG. 6 to FIG. 10 indicate different layouts of same interface content on a mobile phone screen. The interface content layout of the mobile phone screen may be adjusted by referring to the following method:

(1) First, a position and an angle of the mobile phone in space are detected by using a gravity sensor or a gyro, where an angle included between the mobile phone and the horizontal plane is denoted by $\gamma$. Certainly, an angle (which may be 90-$\gamma$ in size) included between the mobile phone and a vertical plane may also be measured and recorded.

(2) When $\gamma$ is between preset angles $\alpha$ and $\beta$, display of the interface content layout of the mobile phone screen does not change, as shown in FIG. 6. If the angle 90-$\gamma$ included between the mobile phone and the vertical plane is measured and recorded, it may be understood that when 90-$\gamma$ is between preset angles 90-$\beta$ and 90-$\alpha$, the display of the interface content layout of the mobile phone screen does not change, and the following description may also be understood adaptively.

(3) When $\gamma$ is outside the range between $\alpha$ and $\beta$, the counter-gravity sensing display or the gravity sensing display may be started. That is, according to the basic horizontal plane, layout display of all or a part of the interface content of the mobile terminal screen is adjusted in a same direction as counter-gravity sensing or gravity sensing.

(4) Counter-gravity sensing display rules include at least one of the following:

(a) When $\gamma$ is less than $\alpha$ and greater than $\mu$, the direction of counter-gravity sensing is downward, and the interface content of the mobile phone screen is shifted downward on the screen. As shown in FIG. 7, in a process of shifting entire interface content of the mobile phone screen downward on the screen, an interface content part in an area A is moved to a touchable area of the mobile phone screen, which may make it convenient for the user to operate the interface content that is originally not conveniently touchable in the area A.

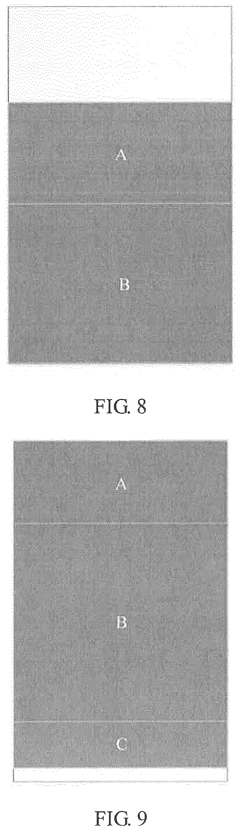

(b) Optionally, when $\gamma$ is less than or equal to $\mu$, the interface content of the mobile phone screen is shifted downward on the screen till an extreme position is reached. As shown in FIG. 8, the interface content in the area A is fully moved to the touchable area, which makes it more convenient for the user to operate the interface content that is originally not conveniently touchable in the area A. When $\gamma$ is less than or equal to $\mu$, the interface content of the mobile phone screen is shifted downward on the screen till the extreme position is reached, which may prevent user experience from being affected by unlimited shifting of the interface content of the mobile phone screen caused by continuous decreasing of the tilt angle, and further improve smartness and usability of the mobile phone.

(c) When $\gamma$ is less than $\mu2$ and greater than $\beta$, the direction of counter-gravity sensing is upward, and the interface content of the mobile phone screen is shifted upward on the screen. As shown in FIG. 9, an interface content part in an area C is moved to the touchable area of the mobile phone screen, which may make it convenient for the user to operate the interface content that is originally not conveniently touchable in the area C.

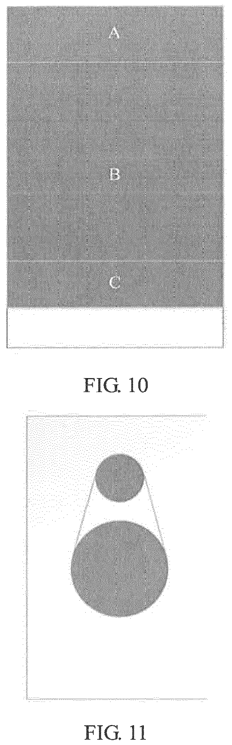

(d) Optionally, when $\gamma$ is greater than or equal to $\mu2$, the interface content of the mobile phone screen is shifted upward on the screen till an extreme position is reached. As shown in FIG. 10, the interface content in the area C is fully moved to the touchable area, which makes it more convenient for the user to operate the interface content that is originally not conveniently touchable in the area C. When $\gamma$ is greater than or equal to $\mu2$, the interface content of the mobile phone screen is shifted upward on the screen till the extreme position is reached, which may prevent user experience from being affected by unlimited shifting of the interface content of the mobile phone screen caused by continuous increasing of the tilt angle, and further improve smartness and usability of the mobile phone.

(5) Gravity sensing display rules include at least one of the following:

(a) When $\gamma$ is less than $\alpha$ and greater than $\mu$, the direction of gravity sensing is upward, and the interface content of the mobile phone screen is shifted (or panned or floated) upward on the screen. As shown in FIG. 9, an interface content part in an area C is moved to the touchable area of the mobile phone screen, which may make it convenient for the user to operate the interface content that is originally not conveniently touchable in the area C.

(b) Optionally, when $\gamma$ is less than or equal to $\mu$, the interface content of the mobile phone screen is shifted upward on the screen till an extreme position is reached. As shown in FIG. 10, the interface content in the area C is fully moved to the touchable area, which makes it more convenient for the user to operate the interface content that is originally not conveniently touchable in the area C.

(c) When $\gamma$ is less than $\mu2$ and greater than $\beta$, the direction of gravity sensing is downward, and the interface content of the mobile phone screen is shifted downward on the screen. As shown in FIG. 7, in a process of shifting entire interface content of the mobile phone screen downward on the screen, an interface content part in an area A is moved to the touchable area of the mobile phone screen, which may make it convenient for the user to operate the interface content that is originally not conveniently touchable in the area A.

(d) Optionally, when $\gamma$ is greater than or equal to $\mu2$, the interface content of the mobile phone screen is shifted downward on the screen till an extreme position is reached. As shown in FIG. 8, the interface content in the area A is fully moved to the touchable area, which makes it more convenient for the user to operate the interface content that is originally not conveniently touchable in the area A.

When actually using the mobile phone, the user may use the foregoing rules to tilt the mobile phone according to an area in which a desired operation object is located, so as to correspondingly adjust the interface content of the mobile phone screen and meet an operation requirement of the user. Especially when the user uses the mobile phone with a single hand, objects in some areas are sometimes hardly touchable with a single hand, and the mobile phone may be tilted by using the foregoing rules, so as to correspondingly adjust the interface content of the mobile phone screen. In this way, an object that is originally not touchable with a single hand is adjusted to a touchable position, so that the user can conveniently operate the object with a single hand, and the operation requirement of the user is better met.

The foregoing rules are also applicable to adjustment processing performed on the interface content of the mobile phone screen when the mobile phone tilts leftward or rightward. An angle involved when the mobile phone tilts upward or downward may be an angle included between the length direction of the mobile phone screen and the horizontal plane (or vertical plane), and an angle involved when the mobile phone tilts leftward or rightward may be an angle included between a width direction of the mobile phone screen and the horizontal plane (or vertical plane).

Based on Embodiment 1, an adjustment angle may be determined according to the tilt angle, and all or a part of the interface content of the mobile terminal screen may be rotated around a center of the mobile terminal screen, where an angle of the rotating is the adjustment angle. Further, a rotation direction may be determined according to the tilt angle, and may be specifically a clockwise or counterclockwise direction.

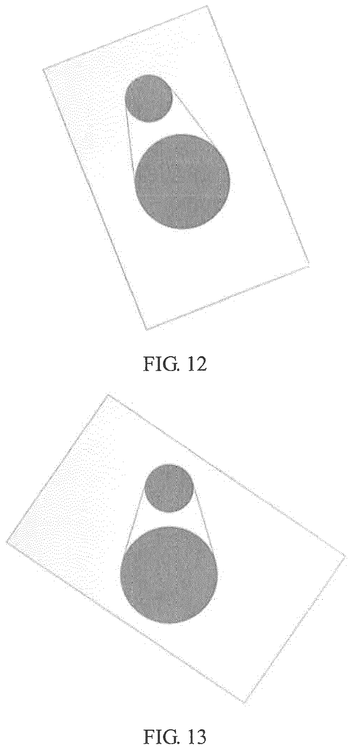

FIG. 11 shows normally displayed interface content of the mobile phone screen. When the user tilts the mobile phone at a specific angle in a process of using the mobile phone, and when the current tilt angle of the mobile phone is in a preset angle range, the interface content layout of the mobile phone screen is not adjusted, as shown in FIG. 12. When the current tilt angle of the mobile phone is outside the preset angle range, all or a part of the interface content of the mobile phone screen is rotated according to the current tilt angle, detected by gravity sensing, of the mobile phone (as shown in a schematic diagram showing a rotation effect in FIG. 13). An extent or angle of the rotating is related to the tilt angle. For example, an adjustment magnitude (which is the angle of the rotating herein) corresponding to the tilt angle may be obtained by using a preset algorithm or formula. In this embodiment of the present invention, all or a part of the interface content of the mobile phone screen is rotated according to the tilt angle of the mobile phone. The angle of the rotating is related to the tilt angle, and the screen is not switched between a landscape orientation and a portrait orientation at a fixed angle every time (which may be understood as rotating by 90 degrees fixedly). Therefore, different requirements of the user can be better met. For example, the user can more conveniently watch the interface content of the mobile phone screen at different visual angles. In addition, the rotated interface content may be further adjusted, for example, the rotated interface content is zoomed in or out so that an area of the interface content watched by human eyes is a rectangle, and a better viewing effect is provided.

The following specifically uses an example to describe how to rotate all or a part of the interface content of the mobile terminal screen according to the tilt angle.

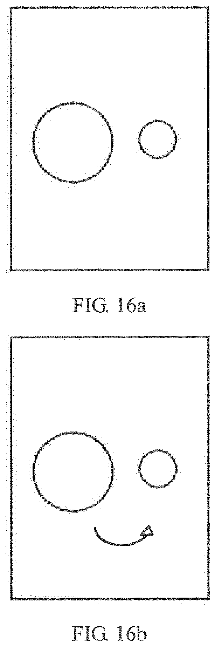

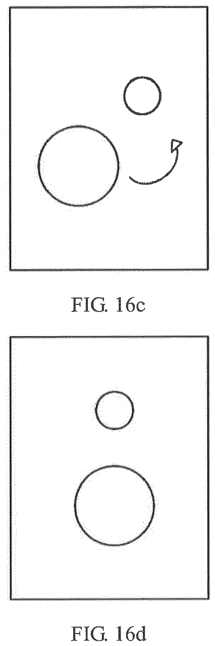

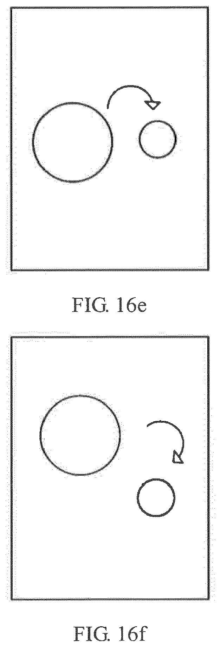

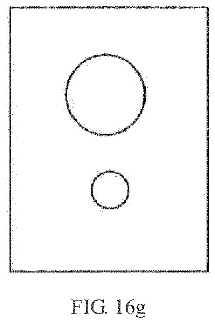

When the mobile phone is in normal use (for example, when the current tilt angle of the mobile phone is in a preset range), the interface content of the mobile phone screen is shown in FIG. 16a, and is displayed horizontally. When the current tilt angle of the mobile phone is shown in FIG. 5a, the interface content of the mobile phone screen may be rotated counterclockwise (as shown in FIG. 16b and FIG. 16c, in which an arrow indicates a rotation direction). As the tilt angle increases continuously, when the tilt angle reaches the maximum tilt angle (such as $\mu2$), the interface content of the mobile phone screen becomes displayed vertically after being rotated (as shown in FIG. 16d). When the current tilt angle of the mobile phone is shown in FIG. 4a, the interface content of the mobile phone screen may be rotated clockwise (as shown in FIG. 16e and FIG. 16f). As the tilt angle decreases continuously, when the tilt angle reaches the minimum tilt angle (such as $\mu$), the interface content of the mobile phone screen becomes displayed upside down after being rotated (as shown in FIG. 16g).

**Embodiment 2**

As shown in FIG. 2, in another embodiment of a method for controlling mobile terminal screen display according to the present invention, the method includes:

　　101. Acquire a current tilt angle of a mobile terminal.
　　202. Adjust an interface content layout of a mobile terminal screen according to the tilt angle of the mobile terminal when determining that the current tilt angle is in a first preset angle range.
　　203. Keep an existing interface content layout of a mobile terminal screen when determining that the current tilt angle of the mobile terminal is in a second or third preset angle range. The second, first, and third preset angle ranges sequentially form a continuous angle range.

Further, the adjusting an interface content layout of a mobile terminal screen according to the tilt angle includes:

　　determining an adjustment magnitude according to the tilt angle, and adjusting all or a part of interface content of the mobile terminal screen according to the adjustment magnitude.

Further, the determining an adjustment magnitude according to the tilt angle, and adjusting all or a part of interface content of the mobile terminal screen according to the adjustment magnitude includes:

　　determining an adjustment distance according to the tilt angle, and panning or floating all or a part of the interface content of the mobile terminal screen, where a distance of the panning or floating is the adjustment distance; or
　　determining an adjustment angle according to the tilt angle, and rotating all or a part of the interface content of the mobile terminal screen around a center of the mobile terminal screen, where an angle of the rotating is the adjustment angle.

Further, the adjusting an interface content layout of a mobile terminal screen according to the tilt angle further includes: determining an adjustment direction according to the tilt angle, and adjusting the interface content layout of the mobile terminal screen in the determined adjustment direction.

Further, the first preset angle range is:

　　a range of an angle greater than or equal to a first threshold and less than or equal to a second threshold, where the first threshold is less than the second threshold.

Specifically, the current tilt angle of the mobile terminal may be an acute angle or a right angle, the first threshold is greater than 0 degrees, and the second threshold is less than or equal to 90 degrees.

For example, the first threshold may be 30 degrees, and the second threshold may be 60 degrees.

In this embodiment, that a current tilt angle of a mobile phone is outside a normal angle range of the mobile phone held by a user may be specifically: the current tilt angle of the mobile phone is between the first threshold and the second threshold. That is, that the current tilt angle of the mobile phone is in the normal angle range of the mobile phone held by the user may be specifically: the current tilt angle of the mobile phone is less than the first threshold or greater than the second threshold.

Further, the method may further include:

　　acquiring ambient light intensity information of the mobile terminal, where
　　the ambient light intensity information of the mobile terminal may be acquired by using a light sensor.

The determining an adjustment magnitude according to the tilt angle specifically includes:

　　determining, according to the ambient light intensity information, an adjustment magnitude corresponding to the tilt angle.

Further, the method may further include:

　　receiving angle range adjustment information; and adjusting at least one preset angle range of the first, second, or third preset angle range according to the angle range adjustment information.

Information about adjustment of an angle range may be received from a user. In this way, for a different user, a proper angle range may be configured for the different user according to an actual use habit or requirement of the different user, and the interface content layout of the mobile terminal screen may be adjusted according to the proper angle range. Such an adjustment can better meet the actual use habit or requirement of the user, and reduce an unnecessary adjustment of the interface content layout of the mobile terminal screen.

Further, optionally, the method may further include:

receiving feedback information of a user; and
the determining an adjustment magnitude according to the tilt angle may include:

determining, according to the feedback information, an adjustment magnitude corresponding to the tilt angle.

For example, after the interface content layout of the mobile terminal screen is adjusted, a feedback about this adjustment may be received from the user. For example, the user may feed back whether an adjustment size is too great or too small, so that the adjustment size is configured according to the feedback information of the user.

In the present invention, the first threshold and/or the second threshold may be preset by the mobile terminal, or set by the user, or obtained after statistics are performed according to a circumstance of using the mobile terminal by the user. For a different user, the first threshold and/or the second threshold may be determined according to a use habit of the different user. Generally, when a user holds a mobile terminal such as a mobile phone normally, the mobile phone is not necessarily exactly horizontal or vertical, but tilts at a specific angle, and an angle range exists between the mobile phone and a horizontal plane and/or a vertical plane. In the prior art, in all circumstances in which the mobile phone is not horizontal or vertical as detected by a gravity sensor, it is determined that the mobile phone is in a tilt state, and an interface content layout currently displayed on a mobile phone screen is adjusted. Consequently, although sometimes the mobile phone tilts at a specific angle, the user is using the mobile phone normally, and adjusting interface content currently displayed on the mobile phone screen affects the user in normally using the mobile phone. According to the present invention, a gravity sensor or a gyro is used to detect a current tilt angle of the mobile phone. When the current tilt angle of the mobile phone is in a normal angle range (the second or third preset angle range in this embodiment) of the mobile phone held by the user, the interface content layout currently displayed on the mobile phone screen is not adjusted, which better meets a user habit of using the mobile phone, avoids an unnecessary adjustment of the interface content layout currently displayed on the mobile phone screen, reduces power consumption of the mobile phone, and enhances user experience of the mobile phone. When the current tilt angle of the mobile phone is outside the normal angle range (in the first preset angle range in this embodiment) of the mobile phone held by the user, the interface content layout of the mobile phone screen is adjusted according to the tilt angle. Because the first threshold and the second threshold are related to the user habit of using the mobile phone, a more intelligent method for adjusting the interface content layout of the mobile phone screen, which provides better experience, can be provided for the user in this embodiment of the present invention based on the user habit of using the mobile phone.

The first, second, or third preset angle range in this embodiment of the present invention may be the same as or different from the first, second, or third preset angle range in Embodiment 1.

For some content in this embodiment of the present invention, reference may be made to a related part in Embodiment 1, and such content may be understood in a same or similar way and is not described in detail herein.

**Embodiment 3**

This embodiment of the present invention further provides a mobile terminal. FIG. 14 shows an embodiment of a mobile terminal provided in the present invention. In this embodiment, the mobile terminal includes:

a sensor 1401, configured to acquire a current tilt angle of the mobile terminal, where
the sensor 1401 may be one or more sensors with a same function or different functions, which may include a gravity sensor or a gyro sensor, and further, optionally, may include a light sensor or the like;
a screen 1402, configured to display interface content on the mobile terminal; and
a processor 1403, configured to adjust an interface content layout of a mobile terminal screen according to the tilt angle of the mobile terminal when determining that the current tilt angle of the mobile terminal is in a second or third preset angle range; or keep an interface content layout of a mobile terminal screen when determining that the current tilt angle of the mobile terminal is in a first preset angle range, where the second, first, and third preset angle ranges sequentially form a continuous angle range.

Alternatively, in another embodiment - Embodiment 4, the processor 1403 is configured to adjust an interface content layout of a mobile terminal screen according to the tilt angle of the mobile terminal when determining that the current tilt angle is in a first preset angle range; or keep an interface content layout of a mobile terminal screen when determining that the current tilt angle of the mobile terminal is in a second or third preset angle range, where the second, first, and third preset angle ranges sequentially form a continuous angle range.

There may be one or more processors 1403, for example, an image processor may be included.

Further, the mobile terminal may further include a memory 1407 configured to store all kinds of data or instructions, and may further include a receiver 1405 and a transmitter 1406 that are respectively configured to receive and transmit a signal.

Based on Embodiment 3 or 4, further, the processor 1403 being configured to adjust an interface content layout of a mobile terminal screen according to the tilt angle includes:

the processor 1403 being configured to determine an adjustment magnitude according to the tilt angle, and adjust all or a part of interface content of the mobile terminal screen according to the adjustment magnitude.

Based on Embodiment 3 or 4, further, the processor 1403 being configured to determine an adjustment magnitude according to the tilt angle, and adjust all or a part of interface content of the mobile terminal screen according to the adjustment magnitude includes:

the processor 1403 being configured to determine an adjustment distance according to the tilt angle, and pan or float all or a part of the interface content of the mobile terminal screen, where a distance of the panning or floating is the adjustment distance; or the processor 1403 being configured to determine an adjustment angle according to the tilt angle, and rotate all or a part of the interface content of the mobile terminal screen around a center of the mobile terminal screen, where an angle of the rotating is the adjustment angle.

Based on Embodiment 3 or 4, further, the processor 1403 being configured to adjust an interface content layout of a mobile terminal screen according to the tilt angle further includes: the processor 1403 being configured to determine an adjustment direction according to the tilt angle, and adjust the interface content layout of the mobile terminal screen in the determined adjustment direction.

Based on Embodiment 3 or 4, further, the first preset angle range is:

a range of an angle greater than or equal to a first threshold and less than or equal to a second threshold, where the first threshold is less than the second threshold.

Specifically, the current tilt angle of the mobile terminal may be an acute angle or a right angle, the first threshold is greater than 0 degrees, and the second threshold is less than or equal to 90 degrees.

For example, the first threshold may be 30 degrees, and the second threshold may be 60 degrees.

Based on Embodiment 3, further, the processor 1403 being configured to determine an adjustment direction according to the tilt angle is specifically:

the processor being configured to: when the current tilt angle is in the second preset angle range, determine that the adjustment direction is a first direction; or

when the current tilt angle is in the third preset angle range, determine that the adjustment direction is a second direction.

Based on Embodiment 3, in a specific embodiment, the tilt angle of the mobile terminal is an angle included between a length direction of the mobile terminal screen and a horizontal plane.

In an implementation manner, the processor 1403 being configured to determine an adjustment direction according to the tilt angle, and adjust the interface content layout of the mobile terminal screen in the determined adjustment direction includes:

the processor 1403 being configured to:

if the current tilt angle of the mobile terminal is less than the first threshold, determine that the adjustment direction is upward, and pan or float all or a part of the interface content of the mobile terminal screen upward on the screen; or if the current tilt angle of the mobile terminal is greater than the second threshold, determine that the adjustment direction is downward, and pan or float all or a part of the interface content of the mobile terminal screen downward on the screen.

Alternatively,
in another implementation manner, the processor 1403 being configured to determine an adjustment direction according to the tilt angle, and adjust the interface content layout of the mobile terminal screen in the determined adjustment direction includes:

the processor 1403 being configured to:

if the current tilt angle of the mobile terminal is less than the first threshold, determine that the adjustment direction is downward, and pan or float all or a part of the interface content of the mobile terminal screen downward on the screen; or if the current tilt angle of the mobile terminal is greater than the second threshold, determine that the adjustment direction is upward, and pan or float all or a part of the interface content of the mobile terminal screen upward on the screen.

Based on Embodiment 3, in another specific embodiment, the tilt angle of the mobile terminal is an angle included between a width direction of the mobile terminal screen and a horizontal plane.

In an implementation manner, the processor 1403 being configured to determine an adjustment direction according to the tilt angle, and adjust the interface content layout of the mobile terminal screen in the determined adjustment direction includes:

the processor 1403 being configured to:

if the current tilt angle of the mobile terminal is less than the first threshold, determine that the adjustment direction is rightward, and pan or float all or a part of the interface content of the mobile terminal screen rightward on the screen; or
if the current tilt angle of the mobile terminal is greater than the second threshold, determine that the adjustment direction is leftward, and pan or float all or a part of the interface content of the mobile terminal screen leftward on the screen.

Alternatively,
in another implementation manner, the processor 1403 being configured to determine an adjustment direction according to the tilt angle, and adjust the interface content layout of the mobile terminal screen in the determined adjustment direction includes:

the processor 1403 being configured to:

if the current tilt angle of the mobile terminal is less than the first threshold, determine that the adjustment direction is leftward, and pan or float all or a part of the interface content of the mobile terminal screen leftward on the screen; or
if the current tilt angle of the mobile terminal is greater than the second threshold, determine that the adjustment direction is rightward, and pan or float all or a part of the interface content of the mobile terminal screen rightward on the screen.

Based on Embodiment 3 or 4, further, the sensor 1401 is further configured to acquire ambient light intensity information of the mobile terminal; and
the processor 1401 being configured to determine an adjustment magnitude according to the tilt angle specifically includes:

the processor 1401 being configured to determine, according to the ambient light intensity information, an adjustment magnitude corresponding to the tilt angle.

Based on Embodiment 3 or 4, further, the processor 1403 is further configured to:

receive angle range adjustment information; and
adjust at least one preset angle range of the first, second, or third preset angle range according to the angle range adjustment information.

It should be noted that each apparatus embodiment may be understood by referring to content in a corresponding method embodiment and is not described in detail herein, and content that is the same or similar in method embodiments may also be understood by referring to each other and is not described in detail herein.
It should be noted that in this specification, relational terms such as first and second are only used to distinguish one entity or operation from another entity or operation, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements which are not expressly listed, or further includes elements inherent to such a process, method, article, or device. An element preceded by "includes a..." does not, without more constraints, preclude the existence of additional identical elements in the process, method, article, or device that includes the element.
A person of ordinary skill in the art may understand that all or part of the steps of the method specified in any foregoing embodiment may be implemented by a program instructing related hardware. The program may be stored in a readable storage medium such as a FLASH or an EEPROM of a mobile terminal. When the program runs, the program executes all or part of the steps described above.
In the foregoing specific implementation manners, the objective, technical solutions, and benefits of the present invention are further described in detail. It should be understood that different embodiments can be combined. The foregoing descriptions are merely specific implementation manners of the present invention, but are not intended to limit the protection scope of the present invention. Any combination, modification, equivalent replacement, or improvement made without departing from the spirit and principle of the present invention should fall within the protection scope of the present invention.

**Claims**

1. A method for controlling mobile terminal screen display, wherein the method comprises:

acquiring a current tilt angle of a mobile terminal; and
adjusting an interface content layout of a mobile terminal screen according to the tilt angle when determining that the current tilt angle is in a second or third preset angle range; or

keeping an existing interface content layout of a mobile terminal screen when determining that the current tilt angle of the mobile terminal is in a first preset angle range, wherein the second, first, and third preset angle ranges sequentially form a continuous angle range.

2. The method according to claim 1, wherein the adjusting an interface content layout of a mobile terminal screen according to the tilt angle comprises:

determining an adjustment magnitude according to the tilt angle, and adjusting all or a part of interface content of the mobile terminal screen according to the adjustment magnitude.

3. The method according to claim 2, wherein the determining an adjustment magnitude according to the tilt angle, and adjusting all or a part of interface content of the mobile terminal screen according to the adjustment magnitude comprises:

determining an adjustment distance according to the tilt angle, and panning or floating all or a part of the interface content of the mobile terminal screen, wherein a distance of the panning or floating is the adjustment distance; or determining an adjustment angle according to the tilt angle, and rotating all or a part of the interface content of the mobile terminal screen around a center of the mobile terminal screen, wherein an angle of the rotating is the adjustment angle.

4. The method according to claim 2 or 3, wherein the adjusting an interface content layout of a mobile terminal screen according to the tilt angle further comprises: determining an adjustment direction according to the tilt angle, and adjusting the interface content layout of the mobile terminal screen in the determined adjustment direction.

5. The method according to claim 4, wherein the determining an adjustment direction according to the tilt angle comprises:

when the current tilt angle is in the second preset angle range, determining that the adjustment direction is a first direction; or when the current tilt angle is in the third preset angle range, determining that the adjustment direction is a second direction.

6. The method according to either claim 4 or claim 5, wherein the first preset angle range is:

a range of an angle greater than or equal to a first threshold and less than or equal to a second threshold, wherein the first threshold is less than the second threshold; the tilt angle of the mobile terminal is an angle comprised between a length direction of the mobile terminal screen and a horizontal plane; and the determining an adjustment direction according to the tilt angle, and adjusting the interface content layout of the mobile terminal screen in the determined adjustment direction comprises:

if the current tilt angle of the mobile terminal is less than the first threshold, determining that the adjustment direction is upward, and panning or floating all or a part of the interface content of the mobile terminal screen upward on the screen; or if the current tilt angle of the mobile terminal is greater than the second threshold, determining that the adjustment direction is downward, and panning or floating all or a part of the interface content of the mobile terminal screen downward on the screen.

7. The method according to either claim 4 or claim 5, wherein the first preset angle range is:

a range of an angle greater than or equal to a first threshold and less than or equal to a second threshold, wherein the first threshold is less than the second threshold; the tilt angle of the mobile terminal is an angle comprised between a length direction of the mobile terminal screen and a horizontal plane; and the determining an adjustment direction according to the tilt angle, and adjusting the interface content layout of the mobile terminal screen in the determined adjustment direction comprises:

if the current tilt angle of the mobile terminal is less than the first threshold, determining that the adjustment direction is downward, and panning or floating all or a part of the interface content of the mobile terminal screen downward on the screen; or if the current tilt angle of the mobile terminal is greater than the second threshold, determining that the adjustment direction is upward, and panning or floating all or a part of the interface content of the mobile terminal screen upward on the screen.

8. The method according to either claim 4 or claim 5, wherein the first preset angle range is:

a range of an angle greater than or equal to a first threshold and less than or equal to a second threshold, wherein the first threshold is less than the second threshold;

the tilt angle of the mobile terminal is an angle comprised between a width direction of the mobile terminal screen and a horizontal plane; and the determining an adjustment direction according to the tilt angle, and adjusting the interface content layout of the mobile terminal screen in the determined adjustment direction comprises:

if the current tilt angle of the mobile terminal is less than the first threshold, determining that the adjustment direction is rightward, and panning or floating all or a part of the interface content of the mobile terminal screen rightward on the screen; or
if the current tilt angle of the mobile terminal is greater than the second threshold, determining that the adjustment direction is leftward, and panning or floating all or a part of the interface content of the mobile terminal screen leftward on the screen.

9. The method according to either claim 4 or claim 5, wherein the first preset angle range is:

a range of an angle greater than or equal to a first threshold and less than or equal to a second threshold, wherein the first threshold is less than the second threshold;
the tilt angle of the mobile terminal is an angle comprised between a width direction of the mobile terminal screen and a horizontal plane; and the determining an adjustment direction according to the tilt angle, and adjusting the interface content layout of the mobile terminal screen in the determined adjustment direction comprises:

if the current tilt angle of the mobile terminal is less than the first threshold, determining that the adjustment direction is leftward, and panning or floating all or a part of the interface content of the mobile terminal screen leftward on the screen; or
if the current tilt angle of the mobile terminal is greater than the second threshold, determining that the adjustment direction is rightward, and panning or floating all or a part of the interface content of the mobile terminal screen rightward on the screen.

10. The method according to any one of claims 2 to 9, wherein the method further comprises:

acquiring ambient light intensity information of the mobile terminal; and
the determining an adjustment magnitude according to the tilt angle specifically comprises:

determining, according to the ambient light intensity information, an adjustment magnitude corresponding to the tilt angle.

11. The method according to any one of claims 1 to 10, further comprising:

receiving angle range adjustment information; and
adjusting at least one preset angle range of the first, second, or third preset angle range according to the angle range adjustment information.

12. A method for controlling mobile terminal screen display, wherein the method comprises:

acquiring a current tilt angle of a mobile terminal; and
adjusting an interface content layout of a mobile terminal screen according to the tilt angle of the mobile terminal when determining that the current tilt angle is in a first preset angle range; or keeping an existing interface content layout of a mobile terminal screen when determining that the current tilt angle of the mobile terminal is in a second or third preset angle range, wherein the second, first, and third preset angle ranges sequentially form a continuous angle range.

13. A mobile terminal, wherein the mobile terminal comprises:

a sensor, configured to acquire a current tilt angle of the mobile terminal;
a screen, configured to display interface content on the mobile terminal; and
a processor, configured to adjust an interface content layout of a mobile terminal screen according to the tilt angle of the mobile terminal when determining that the current tilt angle is in a second or third preset angle range; or keep an interface content layout of a mobile terminal screen when determining that the current tilt angle of the mobile terminal is in a first preset angle range, wherein
the second, first, and third preset angle ranges sequentially form a continuous angle range.

14. The mobile terminal according to claim 13, wherein the processor being configured to adjust an interface content layout of a mobile terminal screen according to the tilt angle comprises:

the processor being configured to determine an adjustment magnitude according to the tilt angle, and adjust all or a part of interface content of the mobile terminal screen according to the adjustment magnitude.

**15.** The mobile terminal according to claim 14, wherein the processor being configured to determine an adjustment magnitude according to the tilt angle, and adjust all or a part of interface content of the mobile terminal screen according to the adjustment magnitude comprises:

the processor being configured to determine an adjustment distance according to the tilt angle, and pan or float all or a part of the interface content of the mobile terminal screen, wherein a distance of the panning or floating is the adjustment distance; or
the processor being configured to determine an adjustment angle according to the tilt angle, and rotate all or a part of the interface content of the mobile terminal screen around a center of the mobile terminal screen, wherein an angle of the rotating is the adjustment angle.

**16.** The mobile terminal according to claim 14 or 15, wherein the processor being configured to adjust an interface content layout of a mobile terminal screen according to the tilt angle further comprises: the processor being configured to determine an adjustment direction according to the tilt angle, and adjust the interface content layout of the mobile terminal screen in the determined adjustment direction.

**17.** The mobile terminal according to claim 16, wherein the processor being configured to determine an adjustment direction according to the tilt angle is specifically:

the processor being configured to: when the current tilt angle is in the second preset angle range, determine that the adjustment direction is a first direction; or
when the current tilt angle is in the third preset angle range, determine that the adjustment direction is a second direction.

**18.** The mobile terminal according to claim 16 or 17, wherein
the first preset angle range is:

a range of an angle greater than or equal to a first threshold and less than or equal to a second threshold, wherein the first threshold is less than the second threshold;
the tilt angle of the mobile terminal is an angle comprised between a length direction of the mobile terminal screen and a horizontal plane; and
the processor being configured to determine an adjustment direction according to the tilt angle, and adjust the interface content layout of the mobile terminal screen in the determined adjustment direction comprises:

the processor being configured to:

if the current tilt angle of the mobile terminal is less than the first threshold, determine that the adjustment direction is upward, and pan or float all or a part of the interface content of the mobile terminal screen upward on the screen; or
if the current tilt angle of the mobile terminal is greater than the second threshold, determine that the adjustment direction is downward, and pan or float all or a part of the interface content of the mobile terminal screen downward on the screen.

**19.** The mobile terminal according to claim 16 or 17, wherein
the first preset angle range is:

a range of an angle greater than or equal to a first threshold and less than or equal to a second threshold, wherein the first threshold is less than the second threshold;
the tilt angle of the mobile terminal is an angle comprised between a length direction of the mobile terminal screen and a horizontal plane; and
the processor being configured to determine an adjustment direction according to the tilt angle, and adjust the interface content layout of the mobile terminal screen in the determined adjustment direction comprises:

the processor being configured to:

if the current tilt angle of the mobile terminal is less than the first threshold, determine that the adjustment direction is downward, and pan or float all or a part of the interface content of the mobile terminal screen downward on the screen; or
if the current tilt angle of the mobile terminal is greater than the second threshold, determine that the adjustment direction is upward, and pan or float all or a part of the interface content of the mobile terminal screen upward on the screen.

**20.** The mobile terminal according to claim 16 or 17, wherein
the first preset angle range is:

a range of an angle greater than or equal to a first threshold and less than or equal to a second threshold, wherein the first threshold is less than the second threshold;

the tilt angle of the mobile terminal is an angle comprised between a width direction of the mobile terminal screen and a horizontal plane; and the processor being configured to determine an adjustment direction according to the tilt angle, and adjust the interface content layout of the mobile terminal screen in the determined adjustment direction comprises:

the processor being configured to:

if the current tilt angle of the mobile terminal is less than the first threshold, determine that the adjustment direction is rightward, and pan or float all or a part of the interface content of the mobile terminal screen rightward on the screen; or
if the current tilt angle of the mobile terminal is greater than the second threshold, determine that the adjustment direction is leftward, and pan or float all or a part of the interface content of the mobile terminal screen leftward on the screen.

21. The mobile terminal according to claim 16 or 17, wherein
the first preset angle range is:

a range of an angle greater than or equal to a first threshold and less than or equal to a second threshold, wherein the first threshold is less than the second threshold;
the tilt angle of the mobile terminal is an angle comprised between a width direction of the mobile terminal screen and a horizontal plane; and the processor being configured to determine an adjustment direction according to the tilt angle, and adjust the interface content layout of the mobile terminal screen in the determined adjustment direction comprises:

the processor being configured to:

if the current tilt angle of the mobile terminal is less than the first threshold, determine that the adjustment direction is leftward, and pan or float all or a part of the interface content of the mobile terminal screen leftward on the screen; or
if the current tilt angle of the mobile terminal is greater than the second threshold, determine that the adjustment direction is rightward, and pan or float all or a part of the interface content of the mobile terminal screen rightward on the screen.

22. The mobile terminal according to any one of claims 14 to 21, wherein the sensor is further configured to acquire ambient light intensity information of the mobile terminal; and
the processor being configured to determine an adjustment magnitude according to the tilt angle specifically comprises:

the processor being configured to determine, according to the ambient light intensity information, an adjustment magnitude corresponding to the tilt angle.

23. The mobile terminal according to any one of claims 13 to 22, wherein the processor is further configured to:

receive angle range adjustment information; and
adjust at least one preset angle range of the first, second, or third preset angle range according to the angle range adjustment information.

24. A mobile terminal, wherein the mobile terminal comprises:

a sensor, configured to acquire a current tilt angle of the mobile terminal;
a screen, configured to display interface content on the mobile terminal; and
a processor, configured to adjust an interface content layout of a mobile terminal screen according to the tilt angle of the mobile terminal when determining that the current tilt angle is in a first preset angle range; or keep an interface content layout of a mobile terminal screen when determining that the current tilt angle of the mobile terminal is in a second or third preset angle range, wherein
the second, first, and third preset angle ranges sequentially form a continuous angle range.

Acquire a current tilt angle of a mobile terminal

101

Adjust an interface content layout of a mobile terminal screen according to the tilt angle when determining that the current tilt angle is in a second or third preset angle range

102

Keep an existing interface content layout of a mobile terminal screen when determining that the current tilt angle of the mobile terminal is in a first preset angle range

103

FIG. 1

Acquire a current tilt angle of a mobile terminal

101

Adjust an interface content layout of a mobile terminal screen according to the tilt angle of the mobile terminal when determining that the current tilt angle is in a first preset angle range

202

Keep an existing interface content layout of a mobile terminal screen when determining that the current tilt angle of the mobile terminal is in a second or third preset angle range

203

FIG. 2

FIG. 3a

FIG. 3b

FIG. 4a

FIG. 4b

FIG. 5a

FIG. 5b

FIG. 6

FIG. 7

FIG. 8

FIG. 9

FIG. 10

FIG. 11

FIG. 12

FIG. 13

FIG. 14

FIG. 15

FIG. 16a

FIG. 16b

FIG. 16c

FIG. 16d

FIG. 16e

FIG. 16f

FIG. 16g

# INTERNATIONAL SEARCH REPORT

| International application No. |
| --- |
| **PCT/CN2014/083097** |

## A. CLASSIFICATION OF SUBJECT MATTER

H04M 1/725 (2006.01) i

According to International Patent Classification (IPC) or to both national classification and IPC

## B. FIELDS SEARCHED

Minimum documentation searched (classification system followed by classification symbols)

H04M; H04Q; H04W; H04B

Documentation searched other than minimum documentation to the extent that such documents are included in the fields searched

Electronic data base consulted during the international search (name of data base and, where practicable, search terms used)

CNPAT, CNKI, WPI, EPODOC: horizontal screen, vertical screen, translate, horizontal, vertical, arrangement, layout, incline, angle, move, roll, revolve

## C. DOCUMENTS CONSIDERED TO BE RELEVANT

| Category* | Citation of document, with indication, where appropriate, of the relevant passages | Relevant to claim No. |
| --- | --- | --- |
| X | CN 102164209 A (BEIJING BENY WAVE SCIENCE AND TECHNOLOGY CO., LTD.), 24 August 2011 (24.08.2011), description, paragraphs [0023]-[0047] | 12, 24 |
| Y | CN 102164209 A (BEIJING BENY WAVE SCIENCE AND TECHNOLOGY CO., LTD.), 24 August 2011 (24.08.2011), description, paragraphs [0023]-[0047] | 1-11, 13-23 |
| Y | CN 201766640 U (BEIJING BORQS SOFTWARE TECHNOLOGY CO., LTD.), 16 March 2011 (16.03.2011), description, paragraphs [0014]-[0024] | 1-11, 13-23 |
| A | CN 101226454 A (WEI, Xincheng), 23 July 2008 (23.07.2008), the whole document | 1-24 |

☐ Further documents are listed in the continuation of Box C.   ☒ See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 24 March 2015 (24.03.2015) | **27 April 2015 (27.04.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HE, Xijia** Telephone No.: (86-10) **62413281** |
| --- | --- |

Form PCT/ISA/210 (second sheet) (July 2009)

## INTERNATIONAL SEARCH REPORT
Information on patent family members

| | International application No. |
|---|---|
| | **PCT/CN2014/083097** |

| Patent Documents referred in the Report | Publication Date | Patent Family | Publication Date |
|---|---|---|---|
| CN 102164209 A | 24 August 2011 | None | |
| CN 201766640 U | 16 March 2011 | None | |
| CN 101226454 A | 23 July 2008 | None | |

Form PCT/ISA/210 (patent family annex) (July 2009)